# EUROPEAN PATENT SPECIFICATION

(11) **EP 4 698 329 B1**
(45) Date of publication and mention of the grant of the patent: **02.09.2026**
(21) Application number: 24748781.2
(22) Date of filing: 11.07.2024
(51) Int. Cl.: B05B 15/30, B29C 48/09, B29C 48/21, B32B 1/08

(54) **DIP TUBE FOR LIQUID SPRAY PUMP DISPENSING APPARATUS AND METHOD OF MANUFACTURE**
STEIGROHR FÜR EINE FLÜSSIGKEITSSPRÜHPUMPAUSGABEVORRICHTUNG SOWIE HERSTELLUNGSVERFAHREN
TUBE PLONGEUR POUR UN DISPOSITIF DE DISTRIBUTION PLUVÉRISÉE DE LIQUIDE À POMPE ET PROCÉDÉ DE FABRICATION

(43) Date of publication of application: 25.02.2026
(73) Proprietor: Tekni-Plex, Inc., Wayne, PA 19087 (US)
(72) Inventor: DE COEN, An, Lieferinge 9400 (BE); VLIEGER, Tom, Zaventem 1930 (BE); ROTTIERS, Jani, Lennik 1750 (BE); SHI, Guangda, Perrysburg, OH 43551 (US)
(74) Representative: Page White Farrer
(86) International application number: PCT/US2024/037497
(87) International publication number: WO 2026/015141

(56) References cited:
- US-A1- 2018 133 108
- US-A1- 2024 026 096

## Description

### FIELD OF THE INVENTION

This application relates to a dip tube for a liquid spray pump dispensing apparatus, and in particular to a liquid fragrance dispensing apparatus having a dispensing (dip) tube that is substantially invisible in the liquid fragrance product and method of making the dip tube.

### BACKGROUND OF THE INVENTION

Manual spray pump bottles are in widespread use for dispensing liquid products as an atomized spray of the liquid (e.g., perfume or fragrance) product. The dispensing apparatus comprises a manually operated nozzle and spray pump assembly disposed in or above a cap closing the top end of a container holding the liquid product, and a dip tube connected to the nozzle and pump assembly that extends down into the liquid product (fragrance) to dispense (via suction) the liquid (as an atomized spray) out the nozzle. The bottle is generally made of glass, and makers of higher end (expensive) perfumes prefer that the dip tube not be visible to the consumer.

The prior art solution to creating an invisible dip tube is to use a polymer having a refractive index that substantially matches the refractive index of the liquid fragrance, typically 1.38 to 1.41. The preferred polymer is a fluoropolymer such as extruded EFEP, made from ethylene, tetrafluoroethylene and hexafluoropropylene. Such polymers are commercially available (for example, RP-5000 from Daikin) having a lower refractive index than most other polymers that matches well with the refractive index of the perfume (1.38-1.41).

However, such polymers contain fluorine which is classified as a PFAS, and many consumer product companies are now trying to eliminate use of PFAS in all their products based on consumer or regulatory demands that disfavor use of such polymers.

It would thus be desirable to provide a dip tube for a liquid spray pump dispensing apparatus that avoids use of fluoropolymers, while maintaining invisibility of the dip tube.

Another polymer suggested for use in a perfume dip tube is silicone. Silicone has a good match to the refractive index of perfume, but it is soft, sticky and difficult to handle in the extrusion molding process and during assembly with the dispensing pump apparatus. Thus, silicone is not a good substitute.

Other polymers previously used in perfume applications are polypropylene and polyethylene, but they lack the clarity and invisibility desired.

Thus, it would be desirable to provide a dip tube that avoids the use of fluoropolymers, is invisible in a liquid fragrance product, and can be easily assembled with a liquid spray pump dispensing apparatus.

US 2024/026096 A1 discloses a tube which includes a layer including a polymer matrix and a refractive index domain dispersed within the polymer matrix, wherein the refractive index domain has a refractive index less that the refractive index of the polymer matrix, the layer having a refractive index of less than 1.42.

US 2018/133108 A1 discloses a drinking straw having an internal coating for delivery of an active agent when the straw is used to consume a beverage.

### SUMMARY OF THE INVENTION

The present invention relates to an extruded dip tube configured to provide substantial invisibility when disposed in a liquid fragrance product. To overcome the above noted challenges, a two-layer starting tube is provided. A first layer of the starting tube is made of a transparent (substantially invisible in the liquid fragrance product) thermoplastic nonfluoropolymer, while a second layer is made of a dissolvable polymer, such as polyvinyl alcohol (PVOH) or other polymer that is readily dissolved in water or solvent such as alcohol (e.g., ethanol). After assembly with the liquid spray pump dispensing apparatus, the second layer of the starting tube is dissolved in water or solvent, leaving only the transparent nonfluoropolymer first layer as the dip tube.

In one embodiment of the invention, a method is provided of making a dip tube, configured for attachment to a nozzle spray pump assembly, wherein the dip tube is substantially invisible when disposed in a liquid fragrance product in a glass container, the method comprising steps of:
providing an extruded concentric two-layer starting tube comprising first and second tube layers, the first tube layer comprising a non-fluoropolymer having a refractive index and a thickness configured to be transparent in a liquid fragrance product disposed in a glass container, the second tube layer comprising a dissolvable polymer that provides structural integrity of the two-layer starting tube during attachment to a nozzle spray pump assembly,
attaching the two-layer starting tube to the nozzle spray pump assembly by securing a surface portion of the first tube layer to an adjacent surface portion of a dispensing channel of the nozzle spray pump assembly,
dissolving the second layer of the two-layer starting tube while the adjacent surface portions of the starting tube and nozzle spray pump assembly remain secured,
wherein the remaining first tube layer secured to the nozzle spray pump assembly is thus configured for use as an invisible dip tube disposed in a liquid fragrance in a glass container.

In one embodiment of the invention,
the first tube layer comprises an outer tube layer and the second tube layer comprises an inner tube layer of the concentric two-layer starting tube,
the attaching step comprises securing an exterior surface portion of the outer tube layer to a matching interior surface portion of the nozzle spray pump assembly,
the dissolving step comprises dissolving the inner tube layer of the two-layer starting tube while the matching exterior and interior surface portions of the starting tube and nozzle spray pump assembly remain secured, and
wherein the remaining outer tube layer secured to the nozzle spray pump assembly is thus configured for use as an invisible dip tube disposed in the liquid fragrance in the glass container.

In one embodiment of the invention,
the first tube layer comprises an inner tube layer and the second tube layer comprises an outer tube layer of the concentric two-layer starting tube,
the attaching step comprises securing an interior surface portion of the inner tube layer to a matching exterior surface portion of the nozzle spray pump assembly,
the dissolving step comprises dissolving the outer tube layer of the two-layer starting tube while the matching interior and exterior surface portions of the starting tube and nozzle pump assembly remain secured, and
wherein the remaining inner tube layer secured to the nozzle spray pump assembly is thus configured for use as an invisible dip tube disposed in the liquid fragrance in the glass container.

In one embodiment of the invention, the dissolvable second tube layer comprises the inner layer of the concentric two-layer starting tube.

In one embodiment of the invention, the dissolvable second tube layer comprises the outer layer of the concentric two-layer starting tube.

In one embodiment of the invention, the nonfluoropolymer first tube layer has a thickness in a range of 10 to 100 micrometers, and the dissolvable second tube layer has a thickness in a range of 100 to 250 micrometers, resulting in a total wall thickness of the two-layer starting tube in a range of 110 to 350 micrometers.

In one embodiment of the invention, the dip tube has a flexural modulus in a range of 200-3500 MPa.

In one embodiment of the invention, the dip tube has a light transmittance in a range of 87-100%.

In one embodiment of the invention, the dip tube is substantially invisible when disposed in the liquid fragrance in the glass container, wherein the glass container is configured to hold 28.4 to 227.3 cm³ (1 to 8 fluid ounces) of the liquid fragrance, and the refractive index of the glass is in a range of 1.5 to 1.6.

In one embodiment of the invention, the non-fluoropolymer of the first tube layer comprises one or more of:
a cycle olefin copolymer (COC),
ethylene vinyl acetate (EVA),
polypropylene (PP),
polyethylene (PE),
thermoplastic elastomer (TPU),
polymer acetate (PA),
polymethyl pentene (PMP),
polyethylene terephthalate (PET), and
polyethylene terephthalate glycol (PETg).

In one embodiment of the invention, the dissolvable polymer of the second tube layer comprises one or more of:
Polyvinyl alcohol (PVOH) (dissolvable in water)
Polylactic Acid (PLA) (dissolvable in water)
Polyethylene glycol (PEG) (dissolvable in water)
Cellulose Acetate (dissolvable in ethanol)
Polymethylmethacrylate (PMMA) (dissolvable in ethanol).

In one embodiment of the invention, the dissolving process comprises disposing the two-layer starting tube while attached to the nozzle spray pump assembly in a dissolving solution for dissolving the second tube layer.

In one embodiment of the invention, the second tube layer comprises the outer layer of the two-layer starting tube, and the dissolving process comprises rinsing the two-layer starting tube while attached to the nozzle spray pump assembly with a dissolving solution for dissolving the second tube layer.

### BRIEF DESCRIPTION OF THE DRAWINGS

For a better understanding of the invention, and to show how the same may be carried into effect, reference will now be made, by way of example to the accompanying drawings, in which:

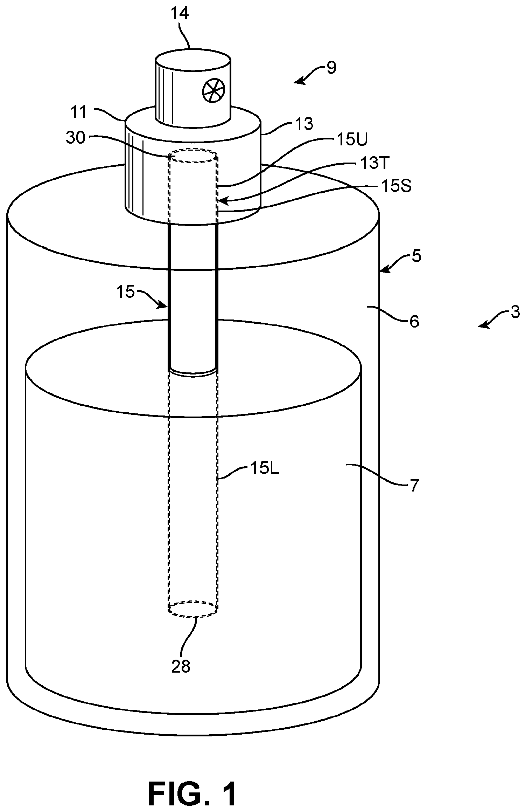

FIG. 1 is a schematic illustration of one embodiment of the invention, wherein a liquid spray pump dispensing apparatus (the nozzle spray pump assembly) is provided with an attached dip tube that extends from the assembly down into a chamber of a glass container holding a liquid fragrance product, for extracting and dispensing the fragrance as a spray out the nozzle of the spray pump assembly attached to a top end of the glass container.

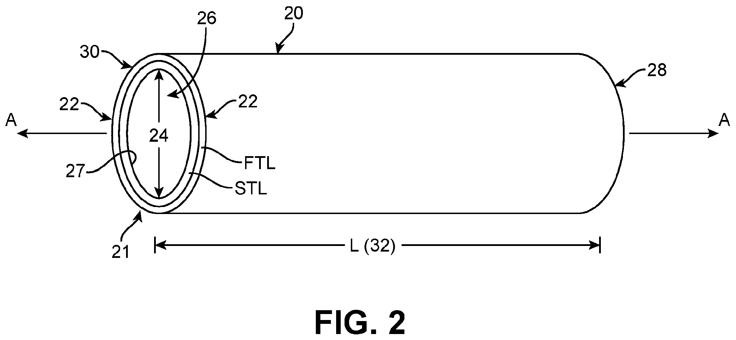

FIG. 2 is a schematic illustration of a two-layer starting tube according to one embodiment of the invention, for making a dip tube for use in the assembly of Fig. 1.

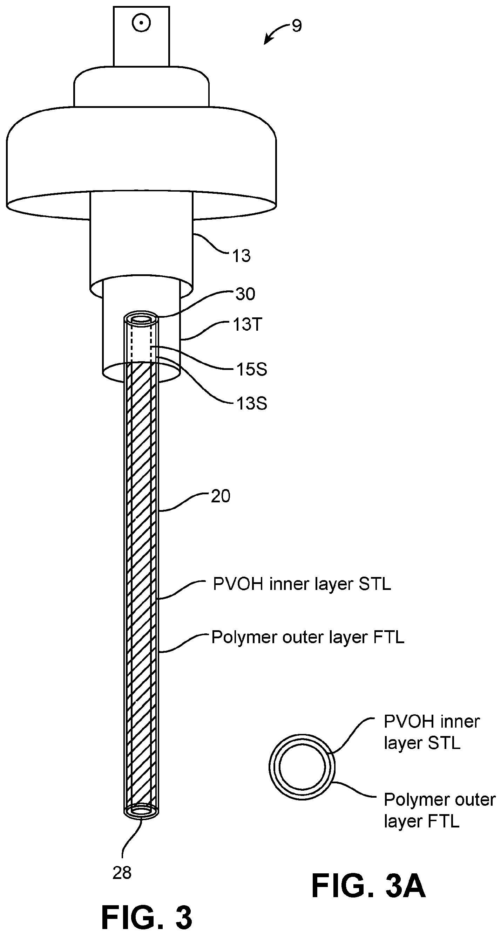

FIG. 3 is schematic illustration of a two-layer starting tube (as shown in FIG. 2) attached to the liquid spray pump dispensing apparatus of FIG. 1 according to a first embodiment of the invention, wherein the two-layer starting tube includes a substantially invisible nonfluoropolymer outer layer and a structural dissolvable inner layer, while FIG. 3A shows a cross-section of the two-layer starting tube; FIG. 3 shows an exterior surface portion of the two-layer starting tube attached to an interior surface portion of a tubular channel of the dispensing apparatus, wherein the inner layer is subsequently dissolved leaving the invisible nonfluoropolymer outer layer remaining as a one-layer dip tube.

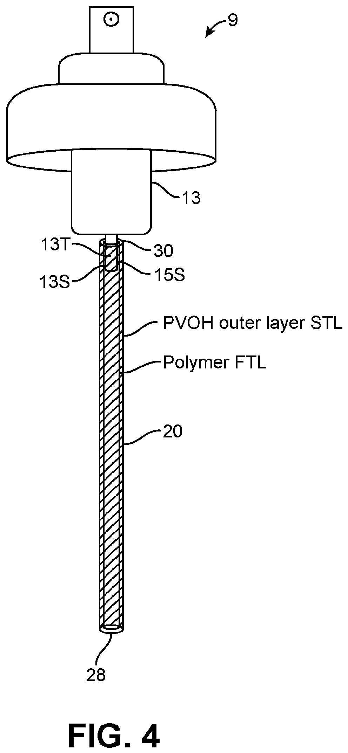

FIG. 4 is schematic illustration of a two-layer starting tube (as shown in FIG. 2) attached to an alternative liquid spray pump dispensing apparatus similar to that of FIG. 1 according to a second embodiment of the invention, wherein the two-layer starting tube includes a substantially invisible nonfluoropolymer inner layer and a structural dissolvable outer layer; FIG. 4 shows an interior surface portion of the inner layer attached to an exterior surface portion of a tubular channel of the dispensing apparatus, wherein the outer layer is subsequently dissolved leaving the invisible nonfluoropolymer inner layer remaining as a one-layer dip tube.

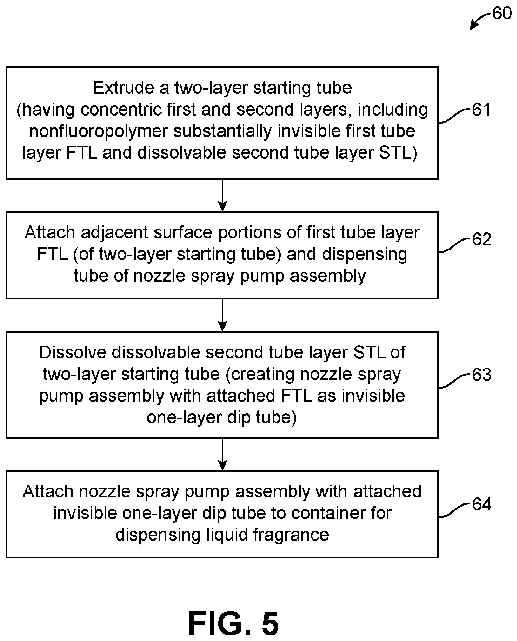

FIG. 5 is a schematic illustration of a method of making a dip tube according to one embodiment of the invention, for use with a liquid spray pump dispensing apparatus such as that shown in FIG. 1.

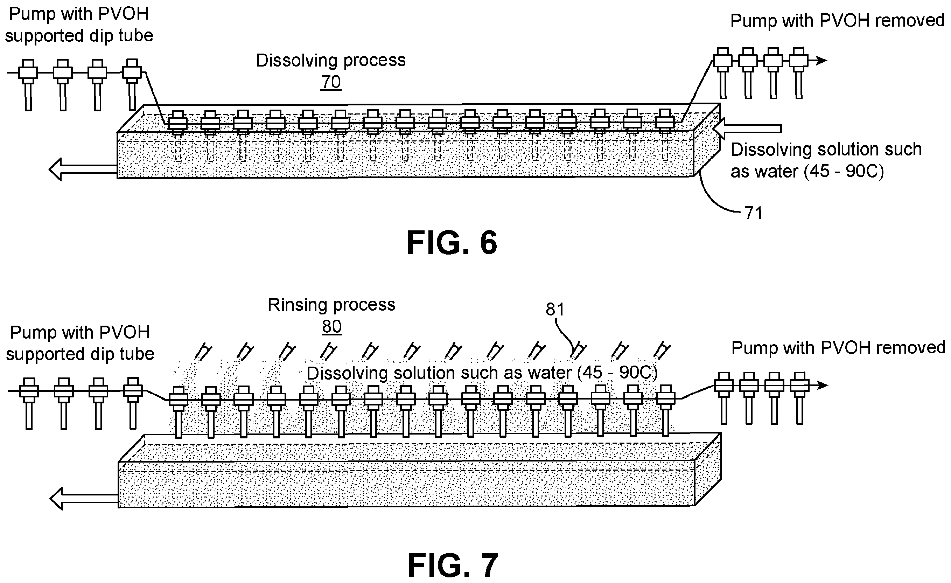

FIG. 6 is a schematic illustration of one embodiment of a dissolving process for removing the dissolvable second layer of the two-layer starting tube while attached to the nozzle spray pump assembly, leaving the remaining nonfluoropolymer first layer attached to the nozzle spray pump assembly, wherein the dissolving process includes disposing the two-layer tube while attached to the nozzle spray pump assembly in a dissolving solution.
FIG. 7 is a schematic illustration of another embodiment of a dissolving process for removing the dissolvable second layer of the two-layer starting tube while attached to the nozzle spray pump assembly, leaving the remaining nonfluoropolymer first layer attached to the nozzle spray pump assembly, wherein the process includes spraying the two-layer tube while attached to the nozzle spray pump assembly with a dissolving solution.

### DETAILED DESCRIPTION

Reference will now be made in detail to various embodiments of the present invention, examples of which are illustrated in the accompanying drawings, wherein like reference numerals refer to the like elements throughout.

Fig. 1 illustrates a dip tube 15, according to one embodiment of the invention, attached to a liquid spray pump dispensing apparatus 9 (also referred to as nozzle spray pump assembly) for dispensing an atomized spray of a liquid fragrance from an interior chamber 6 of a glass bottle or container 5. A lower portion 15L of the dip tube 15 is disposed in the liquid fragrance 7 held in chamber 6, while an upper end portion 15U of the dip tube 15 is attached to the dispensing apparatus 9 that encloses the open top end of the chamber via a cap 11, forming a closed package 3. The dispensing apparatus 9 includes a spray nozzle 14 and a pump assembly 13, to which the upper end 15U of the dip tube 15 is fluidly attached, allowing the liquid fragrance to be drawn out of the chamber 6 via suction by a user activating (pushing on) the movable spray nozzle 14 at the upper end of the pump assembly 13 to dispense a spray of the liquid fragrance out the nozzle 14.

The upper end portion 15U of the dip tube is fluidly connected to a dispensing channel (bore) of a dispensing tube 13T of the pump assembly 13, via concentrically secured matching surface portions 15S and 13S of the dip tube 15 and spray pump dispensing tube 13 respectively. The desired retention force of the matching surface portions 15S and 13S may be provided by friction fit or aided by providing ribs on one or more of the surfaces. In other embodiments, as described below, the needed retention force may be provided by welding or adhesive. Manual pumping of the spray nozzle 14 (atop the dispensing apparatus 9) applies a suction force to draw liquid fragrance into the open lower end 28 of the dip tube and extract the liquid fragrance out the open upper end 30 of the dip tube into the dispensing channel 13T of the pump assembly to be dispensed as a spray of the liquid fragrance product out the spray nozzle 14.

In accordance with the present invention, the dip tube 15 is formed from a two-layer starting tube 20 as shown in the lengthwise view of FIG. 2, comprising a continuous tubular body 20 of concentric first and second tube layers, FTL and STL respectively, extending axially along the length (L) 32 of the tube. Typically, the tubular body 20 is substantially cylindrical, extending some length L along an elongated tube axis A, and having a total sidewall of thickness T extending from an inner starting tube diameter (ID) 24 to an outer starting tube diameter (OD) 22. The first tube layer FTL is configured to become the substantially invisible nonfluoropolymer single layer dip tube 15, after the dissolvable structural second tube layer STL is dissolved, with the STL providing structural integrity during the process of attaching the two-layer tube to the nozzle spray pump assembly 9. While FIG. 2 shows the FTL as the outer layer of the starting tube and the STL as the inner layer of the starting tube, in another embodiment (FIG. 4) the FTL and STL are switched and become the outer and inner layers respectively of the two-layer starting tube.

The respective wall thicknesses of the first and second tube layers FTL and STL are selected, and the polymer materials of the first and second tube layers FTL and STL are selected, to provide secure attachment to the nozzle spray pump assembly 9 as a two-layer starting tube 20, and subsequent dissolving of the second tube layer STL such that the remaining first tube layer FTL serves as a substantially invisible dip tube 15 that allows liquid to be drawn therein by suction action (via the pump 13). The thickness of the single layer dip tube 15 can thus be reduced to enhance invisibility, with the dissolvable layer providing sufficient mechanical strength for rigidity and desirable handling characteristics to the starting tube 20 for required assembly to the pump assembly (at the proximal end 30). The remaining single layer dip tube 15 can then perform within the desired use/application (e.g., non-reactive to the fragrance and able to withstand repeated pumping actions at the proximal end 30) for dispensing the fragrance.

### First Embodiment (FIG. 3)

FIG. 3 is schematic illustration of a two-layer starting tube 20 (as shown in FIG. 2, with the invisible FTL as the outer layer and dissolvable STL as the inner layer) attached to the dispensing apparatus 9 of FIG. 1 according to a first embodiment of the invention. The two-layer starting tube 20 includes a substantially invisible nonfluoropolymer outer layer FTL and a structural dissolvable inner layer STL. FIG. 3 shows an exterior surface portion 15S of the outer first tube layer of the two-layer starting tube 20, attached to an interior surface portion 13S of an interior tubular channel 13T of the dispensing apparatus 9. The inner layer STL of the starting tube 20 is thereafter dissolved with the invisible nonfluoropolymer outer layer FTL remaining as a one-layer dip tube 15 (with matching surface portions 15S and 13S still attached).

### Second Embodiment (FIG. 4)

FIG. 4 is schematic illustration of a two-layer starting tube 20 (similar to FIG. 2 but with FTL and STL reversed as inner and outer layers respectively) attached to a dispensing apparatus 9 similar to that of FIG. 1 according to a second embodiment of the invention. The two-layer starting tube 20 includes a substantially invisible nonfluoropolymer inner layer FTL and a structural dissolvable outer layer STL. FIG. 3 shows an interior surface portion 15S of the inner second tube layer of the two-layer starting tube 20, attached to an exterior surface portion 13S of an exterior tubular channel 13T of the dispensing apparatus 9. The outer layer STL is thereafter dissolved with the invisible nonfluoropolymer inner layer FTL remaining as a one-layer dip tube 15 (with matching surface portions 15S and 13S still attached).

### Method Embodiment (FIG. 5)

FIG. 5 is a schematic illustration of a method of making a dip tube 15 according to one embodiment of the invention, for use with a liquid spray pump dispensing apparatus 9 and glass container 5 such as that shown in FIG. 1. The method 60 includes steps of:
extrude a two-layer starting tube (having concentric first and second layers, including nonfluoropolymer substantially invisible first tube layer FTL and dissolvable second tube layer STL) (step 61)
attach adjacent surface portions of first tube layer FTL (of two-layer starting tube) and dispensing tube of nozzle spray pump assembly (step 62),
dissolve dissolvable second tube layer STL of two-layer starting tube (creating nozzle spray pump assembly with attached FTL as invisible one-layer dip tube) (step 63), and
attach nozzle spray pump assembly with attached invisible one-layer dip tube to container for dispensing liquid fragrance (step 64).

In one embodiment, the step of attaching the two-layer tube to the pump assembly is accomplished by friction fit between the matching surface portions 15S and 13S (of the concentric two-layer tube 20 and dispensing tube 13). In other embodiments, the matching surface portions can be secured by welding (laser, heat or ultrasonic) or bonding (adhesive).

### Dissolving Process, First Embodiment (FIG. 6)

FIG. 6 is a schematic illustration of one embodiment of a dissolving process 70 for removing the dissolvable second tube layer STL of the two-layer starting tube 20 while attached to the nozzle spray pump assembly 9, leaving the remaining nonfluoropolymer first tube layer FTL (now the dip tube 15) attached to the nozzle spray pump assembly 9. The dissolving process 70 includes disposing the two-layer tube 20 while attached to the nozzle spray pump assembly 9 in a dissolving solution 71 for dissolving the STL.

In one embodiment, the assembled two-layer tube 20 and nozzle spray pump assembly 9 are disposed in a warm water or solvent (e.g., ethanol) bath to dissolve the dissolvable STL. In one embodiment the water bath temperature may be, depending on the polymers used, in a range of 20 to 60 degrees Centigrade (C), e.g., 90 degrees C.

In another embodiment, the assembled two-layer tube and nozzle spray pump assembly are disposed in the liquid fragrance product 7, wherein the fragrance itself serves to dissolve the dissolvable layer STL.

### Dissolving Process, Second Embodiment (FIG. 7)

FIG. 7 is a schematic illustration of another embodiment of a dissolving process 80 for removing the dissolvable second tube layer STL of the two-layer starting tube 20 while attached to the nozzle spray pump assembly 9, leaving the remaining nonfluoropolymer first tube layer FTL attached to the nozzle spray pump assembly 9. The dissolving process includes rinsing 81 the two-layer tube 20 while attached to the nozzle spray pump assembly 9 with a dissolving solution for dissolving the STL.

The rinsing step 80 can be implemented sequentially after the mechanical assembly of the two-layer starting tube 20 to the nozzle spray pump assembly 9. A stream/curtain 81 of hot water (as the dissolving solution) can be used to rinse and dissolve away the external PVOH (or other dissolvable polymer) STL in a continuous process while the nozzle spray pump assembly 9 is disposed upright (pump head 13 pointing up in a vertical position, or at an angle where pump head 13 has higher elevation than the tube 20). This reduces any potential for the dissolving solution to contaminate or degrade the pump mechanism 13.

### Alternative Parameters

In various embodiments, the substantially invisible non-fluoropolymer of the first tube layer FTL, which becomes the resulting dip tube 15 polymer, comprises one or more of:
a cycle olefin copolymer (COC),
ethylene vinyl acetate (EVA),
polypropylene (PP),
polyethylene (PE),
thermoplastic polyurethane (TPU),
polymer acetate (PA),
polymethyl pentene (PMP),
polyethylene terephthalate (PET), and
polyethylene terephthalate glycol (PETg).

In one embodiment, the FTL dip tube 15 polymer comprises polymethyl pentene (PMP). One such suitable PMP polymer is known as TPX and is available from Mitsui Chemicals America, Inc., Rye Brook, NY. Preferred properties of the PMP include a flexural modulus > 1.99 × 10⁸ Pa (29,000 psi), a refractive index of approximately 1.46, and a light transmittance > 92%.

In another embodiment, the FTL dip tube 15 polymer comprises a polyolefin material. The polyolefin material may comprise, for example, a polypropylene material comprising one or more of a polypropylene homopolymer and a polypropylene copolymer, or a polyethylene material comprising one or more of a polyethylene homopolymer and a polyethylene copolymer. The polyethylene or polypropylene may be clarified to ensure substantial invisibility by adding clarifying agents that create smaller/fine crystalline structure in the polymer to enhance the optical property of the final product. One suitable clarifying agent is Millad^{®} NX8000 or 3988 for PP available from Milliken Chemical.
Other examples include:

| **Grade** | **Supplier** |
|---|---|
| Millad NX 8000 | Milliken Chemical |
| Irgastab NA 21 | BASF |
| ADK STAB NA-11 | Adeka Corporation |
| NA-100 | PolyOne Corporation |

In another embodiment, the FTL dip tube 15 polymer comprises a cyclic olefin copolymer (COC). The cyclic olefin copolymer (COC) is typically produced by chain copolymerization of a cyclic monomer with ethene, or by ring-opening metathesis polymerization of a cyclic monomer followed by hydrogenation. In one example, the cyclic olefin copolymer is produced by chain copolymerization with ethene of a cyclic monomer comprised of one or more of 8,9,10-trinorborn-2-ene and 1,2,3,4,4a,5,8,8a-octahydro-1,4:5,8-dimethanonaphthalene, or by ring-opening metathesis polymerization of a cyclic monomer followed by hydrogenation.

The FTL polymer materials for the dip tube 15 as defined herein are preferably "nonreactive" meaning they are non-polar and otherwise lacking chemical functionality (functional groups) that would interact with the fragrance, and "contaminant free" meaning they do not contain more than insignificant amounts of potentially unwanted materials (typically less than about 0.5%, and preferably less than about 0.2%, by weight) and/or prevent leaching or leaking of unwanted materials such as plasticizers, catalysts, monomers, metals, salts, ions or other substances that would substantially alter and/or are potentially unwanted in a fragrance.

While other polymers or agents may be present in the FTL polymer, assuming they maintain the substantial invisibility and functional requirements of the single-layer FTL dip tube 15 as described above, the FTL polymer materials for the dip tube 15 preferably comprise at least 90% by weight (of the FTL polymers from the list defined above), more preferably at least 95%, and still more preferably at least 99% of the dip tube.

In various embodiments, the dissolvable polymer of the STL comprises one or more of:
Polyvinyl alcohol (PVOH) (dissolvable in water)
Polylactic Acid (PLA) (dissolvable in water)
Polyethylene glycol (PEG) (dissolvable in water)
Cellulose Acetate (dissolvable in ethanol)
Polymethylmethacrylate (PMMA) (dissolvable in ethanol)
Other polymers dissolvable in ethanol/water.

In various embodiments, the FTL and STL polymers and layers are selected in accordance with the following:
a) Substantially invisible FTL layer thickness: broadly: 10 - 100 µm; preferred: 20 - 70 µm; more preferred: 25-50 µm
b) Dissolvable STL layer thickness: broadly: 100 - 250 µm; preferred: 150 - 200 µm; more preferred: 180 - 220 µm
c) Substantially invisible FTL layer outer diameter: varies depending on the pump design; in one embodiment: 1.5 - 1.6 mm; in one example, 1.58 mm.
d) Substantially invisible FTL layer inner diameter: varies depending on the pump design, the remaining inner diameter will be a result of outer diameter minus remaining layer thickness
e) Refractive index of substantially invisible FTL layer: broadly: 1.344 - 1.58; preferred: 1.38 - 1.5
f) Flexural modulus of substantially invisible FTL layer: broadly: 200 - 3500 MPa; remaining wall thickness in combination with flexural modulus will define the stiffness
g) Light transmittance of substantially invisible FTL layer: broadly: 87% - 100%; preferred: 95 -100%

The transparent glass container 5 can be of various sizes and shapes configured for use with the dip tube of the present invention. A typical fragrance container for use in the present invention would have a chamber sized to hold a quantity of liquid fragrance in a range of 28.4 to 227.3 cm³ (1 oz. to 8 oz (fluid ounces)). The refractive index of the glass container wall (through which the dip tube in the fragrance is viewed from the exterior of the container), is preferably in a range of 1.5 to 1.6.

The dip tube is configured to be substantially invisible to the naked eye of a human observer from the exterior of the transparent glass container through which the dip tube in the fragrance is viewed. A suitable test for determining substantial invisibility is by observing a dip tube in a rectangular glass container while the dip tube is immersed in ethanol, wherein the refractive index of the glass container wall (through which the dip tube in the fragrance is viewed from the exterior of the container) is preferably in a range of 1.5 to 1.6.

In summary, a method is provided for making a dip tube for a liquid spray pump dispensing apparatus configured to provide substantial invisibility when disposed in a liquid fragrance product. To overcome the challenges of the prior art single layer dip tubes, a two-layer starting tube is provided. A first layer of the starting tube is made of a transparent (invisible in the liquid fragrance product) thermoplastic nonfluoropolymer, while a second layer of the starting tube is made of a dissolvable polymer. After assembly with the liquid spray pump dispensing apparatus, the second layer of the starting tube is dissolved in water or solvent (e.g., ethanol), leaving only the transparent nonfluoropolymer first layer as the dip tube. The thickness of the single layer dip tube can thus be reduced to enhance invisibility, with the dissolvable layer providing sufficient flexural strength for rigidity and desirable handling characteristics to the tube for required assembly to the pump assembly. The remaining single layer dip tube can then perform within the desired use/application (e.g., non-reactive to the fragrance and able to withstand repeated pumping for dispensing the fragrance.

## Claims

1. A method of making a dip tube (15), configured for attachment to a nozzle spray pump assembly (9), wherein the dip tube (15) is substantially invisible when disposed in a liquid fragrance product in a glass container (5), the method comprising steps of:
providing an extruded concentric two-layer starting tube (20) comprising first and second tube layers (FTL; STL), the first tube layer (FTL) comprising a non-fluoropolymer having a refractive index and a thickness configured to be transparent in the liquid fragrance product disposed in the glass container (5), the second tube layer (STL) comprising a dissolvable polymer that provides structural integrity of the two-layer starting tube (20) during attachment to a nozzle spray pump assembly (9),
attaching the two-layer starting tube (20) to the nozzle spray pump assembly (9) by securing a surface portion (15S) of the first tube layer (FTL) to an adjacent surface portion (15S) of a dispensing channel (13T) of the nozzle spray pump assembly (9),
dissolving the second layer of the two-layer starting tube (20) while the adjacent surface portions of the starting tube and nozzle spray pump assembly (9) remain secured,
wherein the remaining first tube layer (FTL) secured to the nozzle spray pump assembly (9) is thus configured for use as an invisible dip tube (15) disposed in a liquid fragrance in a glass container (5).

2. The method of claim 1, wherein:
the first tube layer (FTL) comprises an outer tube layer and the second tube layer (STL) comprises an inner tube layer of the concentric two-layer starting tube (20),
the attaching step comprises securing an exterior surface portion of the outer tube layer to a matching interior surface portion of the nozzle spray pump assembly (9),
the dissolving step comprises dissolving the inner tube layer of the two-layer starting tube (20) while the matching exterior and interior surface portions of the starting tube (20) and nozzle spray pump assembly (9) remain secured, and
wherein the remaining outer tube layer secured to the nozzle spray pump assembly (9) is thus configured for use as an invisible dip tube (15) disposed in the liquid fragrance in the glass container (5).

3. The method of claim 1, wherein:
the first tube layer (FTL) comprises an inner tube layer and the second tube layer (STL) comprises an outer tube layer of the concentric two-layer starting tube (20),
the attaching step comprises securing an interior surface portion of the inner tube layer to a matching exterior surface portion of the nozzle spray pump assembly (9),
the dissolving step comprises dissolving the outer tube layer of the two-layer starting tube (20) while the matching interior and exterior surface portions of the starting tube (20) and nozzle pump assembly (9) remain secured, and
wherein the remaining inner tube layer secured to the nozzle spray pump assembly is thus configured for use as an invisible dip tube (15) disposed in the liquid fragrance in the glass container (5).

4. The method of claim 1, wherein the dissolvable second tube layer (STL) comprises the inner layer of the concentric two-layer starting tube (20).

5. The method of claim 1, wherein the dissolvable second tube layer (STL) comprises the outer layer of the concentric two-layer starting tube (20).

6. The method of claim 1, wherein the nonfluoropolymer first tube layer (FTL) has a thickness in a range of 10 to 100 micrometers, and the dissolvable second tube layer (STL) has a thickness in a range of 100 to 250 micrometers, resulting in a total wall thickness of the two-layer starting tube in a range of 110 to 350 micrometers.

7. The method of claim 1, wherein the dip tube (15) has a flexural modulus in a range of 200-3500 MPa.

8. The method of claim 1, wherein the dip tube (15) has a light transmittance in a range of 87-100%.

9. The method of claim 1, wherein the dip tube (15) is substantially invisible when disposed in the liquid fragrance in the glass container (5), wherein the glass container (5) is configured to hold 28.4 to 227.3 cm³ of the liquid fragrance, and the refractive index of the glass is in a range of 1.5 to 1.6.

10. The method of claim 1, wherein the non-fluoropolymer of the first tube layer (FTL) comprises one or more of:
a cycle olefin copolymer (COC),
ethylene vinyl acetate (EVA),
polypropylene (PP),
polyethylene (PE),
thermoplastic elastomer (TPU),
polymer acetate (PA),
polymethyl pentene (PMP),
polyethylene terephthalate (PET), and
polyethylene terephthalate glycol (PETg).

11. The method of claim 1, wherein the dissolvable polymer of the second tube layer (STL) comprises one or more of:
Polyvinyl alcohol (PVOH) (dissolvable in water)
Polylactic Acid (PLA) (dissolvable in water)
Polyethylene glycol (PEG) (dissolvable in water)
Cellulose Acetate (dissolvable in ethanol)
Polymethylmethacrylate (PMMA) (dissolvable in ethanol).

12. The method of claim 1, wherein the dissolving process comprises disposing the two-layer starting tube (20) while attached to the nozzle spray pump assembly (9) in a dissolving solution for dissolving the second tube layer (STL).

13. The method of claim 1, wherein the second tube layer (STL) comprises the outer layer of the two-layer starting tube (20), and the dissolving process comprises rinsing the two-layer starting tube (20) while attached to the nozzle spray pump assembly (9) with a dissolving solution for dissolving the second tube layer (STL).

## Patentansprüche

1. Verfahren zum Herstellen eines Tauchrohrs (15), das zur Befestigung an einer Sprühdüsenpumpenbaugruppe (9) konfiguriert ist, wobei das Tauchrohr (15) wesentlich unsichtbar ist, wenn es in einem flüssigen Duftstoffprodukt in einem Glasbehälter (5) angeordnet ist, das Verfahren umfassend die folgenden Schritte:
Bereitstellen eines extrudierten, konzentrischen, zweischichtigen Ausgangsrohrs (20), umfassend eine erste und eine zweite Rohrschicht (FTL; STL), die erste Rohrschicht (FTL) umfassend ein Nicht-Fluorpolymer mit einem Brechungsindex und einer Dicke, die konfiguriert sind, um in dem in dem Glasbehälter (5) angeordneten flüssigen Duftstoffprodukt transparent zu sein, die zweite Rohrschicht (STL) umfassend ein lösliches Polymer, das die strukturelle Integrität des zweischichtigen Ausgangsrohrs (20) während der Befestigung an einer Sprühdüsenpumpenbaugruppe (9) bereitstellt,
Befestigen des zweischichtigen Ausgangsrohrs (20) an der Sprühdüsenpumpenbaugruppe (9) durch Verbinden eines Oberflächenabschnitts (15S) der ersten Rohrschicht (FTL) mit einem benachbarten Oberflächenabschnitt (15S) eines Ausgabekanals (13T) der Sprühdüsenpumpenbaugruppe (9),
Auflösen der zweiten Schicht des zweischichtigen Ausgangsrohrs (20), während die benachbarten Oberflächenabschnitte des Ausgangsrohrs und der Sprühdüsenpumpenbaugruppe (9) verbunden bleiben,
wobei die verbleibende erste Rohrschicht (FTL), die an der Sprühdüsenpumpenbaugruppe (9) befestigt ist, somit konfiguriert ist, um als unsichtbares Tauchrohr (15) verwendet zu werden, das in einem flüssigen Duftstoff in einem Glasbehälter (5) angeordnet ist.

2. Verfahren nach Anspruch 1, wobei:
die erste Rohrschicht (FTL) eine äußere Rohrschicht umfasst und die zweite Rohrschicht (STL) eine innere Rohrschicht des konzentrischen zweischichtigen Ausgangsrohrs (20) umfasst,
der Befestigungsschritt das Befestigen eines äußeren Oberflächenabschnitts der äußeren Rohrschicht an einem entsprechenden inneren Oberflächenabschnitt der Sprühdüsenpumpenbaugruppe (9) umfasst,
der Auflösungsschritt das Auflösen der inneren Rohrschicht des zweischichtigen Ausgangsrohrs (20) umfasst, während die entsprechenden äußeren und inneren Oberflächenabschnitte des Ausgangsrohrs (20) und der Sprühdüsenpumpenbaugruppe (9) verbunden bleiben, und
wobei die verbleibende äußere Rohrschicht, die an der Sprühdüsenpumpenbaugruppe (9) befestigt ist, somit konfiguriert ist, um als unsichtbares Tauchrohr (15) verwendet zu werden, das in dem flüssigen Duftstoff im Glasbehälter (5) angeordnet ist.

3. Verfahren nach Anspruch 1, wobei:
die erste Rohrschicht (FTL) eine innere Rohrschicht umfasst und die zweite Rohrschicht (STL) eine äußere Rohrschicht des konzentrischen zweischichtigen Ausgangsrohrs (20) umfasst,
der Befestigungsschritt das Befestigen eines inneren Oberflächenabschnitts der inneren Rohrschicht an einem entsprechenden äußeren Oberflächenabschnitt der Sprühdüsenpumpenbaugruppe (9) umfasst,
der Auflösungsschritt das Auflösen der äußeren Rohrschicht des zweischichtigen Ausgangsrohrs (20) umfasst, während die entsprechenden inneren und äußeren Oberflächenabschnitte des Ausgangsrohrs (20) und der Düsenpumpenbaugruppe (9) verbunden bleiben, und
wobei die verbleibende innere Rohrschicht, die an der Sprühdüsenpumpenbaugruppe befestigt ist, somit konfiguriert ist, um als unsichtbares Tauchrohr (15) verwendet zu werden, das in dem flüssigen Duftstoff im Glasbehälter (5) angeordnet ist.

4. Verfahren nach Anspruch 1, wobei die lösliche zweite Rohrschicht (STL) die innere Schicht des konzentrischen zweischichtigen Ausgangsrohrs (20) umfasst.

5. Verfahren nach Anspruch 1, wobei die lösliche zweite Rohrschicht (STL) die äußere Schicht des konzentrischen zweischichtigen Ausgangsrohrs (20) umfasst.

6. Verfahren nach Anspruch 1, wobei die erste Rohrschicht (FTL) aus einem Nicht-Fluorpolymer eine Dicke im Bereich von 10 bis 100 Mikrometer aufweist, und die lösliche zweite Rohrschicht (STL) eine Dicke im Bereich von 100 bis 250 Mikrometer aufweist, was zu einer Gesamtwanddicke des zweischichtigen Ausgangsrohrs im Bereich von 110 bis 350 Mikrometer führt.

7. Verfahren nach Anspruch 1, wobei das Tauchrohr (15) einen Biegemodul im Bereich von 200 bis 3500 MPa aufweist.

8. Verfahren nach Anspruch 1, wobei das Tauchrohr (15) eine Lichtdurchlässigkeit im Bereich von 87 bis 100 % aufweist.

9. Verfahren nach Anspruch 1, wobei das Tauchrohr (15) wesentlich unsichtbar ist, wenn es in dem flüssigen Duftstoff im Glasbehälter (5) angeordnet ist, wobei der Glasbehälter (5) konfiguriert ist, um 28,4 bis 227,3 cm³ des flüssigen Duftstoffs aufzunehmen, und der Brechungsindex des Glases im Bereich von 1,5 bis 1,6 liegt.

10. Verfahren nach Anspruch 1, wobei das Nicht-Fluorpolymer der ersten Rohrschicht (FTL) eines oder mehrere der Folgenden umfasst:
ein Cycloolefin-Copolymer (COC),
Ethylen-Vinylacetat (EVA),
Polypropylen (PP),
Polyethylen (PE),
thermoplastisches Elastomer (TPU),
Polymeracetat (PA),
Polymethylpenten (PMP),
Polyethylenterephthalat (PET) und
Polyethylenterephthalatglykol (PETg).

11. Verfahren nach Anspruch 1, wobei das lösliche Polymer der zweiten Rohrschicht (STL) eines oder mehrere der Folgenden umfasst:
Polyvinylalkohol (PVOH) (wasserlöslich)
Polymilchsäure (PLA) (wasserlöslich)
Polyethylenglykol (PEG) (wasserlöslich)
Celluloseacetat (in Ethanol löslich)
Polymethylmethacrylat (PMMA) (in Ethanol löslich).

12. Verfahren nach Anspruch 1, wobei der Auflösungsvorgang das Einbringen des zweischichtigen Ausgangsrohrs (20) in einer Auflösungslösung zum Auflösen der zweiten Rohrschicht (STL) umfasst, während dieses an der Sprühdüsenpumpenbaugruppe (9) befestigt ist.

13. Verfahren nach Anspruch 1, wobei die zweite Rohrschicht (STL) die äußere Schicht des zweischichtigen Ausgangsrohrs (20) umfasst und der Auflösungsvorgang das Spülen des zweischichtigen Ausgangsrohrs (20) mit einer Auflösungslösung zum Auflösen der zweiten Rohrschicht (STL) umfasst, während dieses an der Sprühdüsenüumpenbaugruppe (9) befestigt ist.

## Revendications

1. Procédé de fabrication d'un tube plongeur (15), conçu pour être fixé à un ensemble pompe de pulvérisation à buse (9), dans lequel le tube plongeur (15) est sensiblement invisible lorsqu'il est placé dans un produit de parfum liquide contenu dans un contenant en verre (5), le procédé comprenant les étapes consistant à :
la fourniture d'un tube de départ concentrique extrudé à deux couches (20), comprenant une première et une seconde couche du tube (FTL ; STL), la première couche du tube (FTL) comprenant un polymère non fluoré ayant un indice de réfraction et une épaisseur conçus pour être transparents dans le produit de parfum liquide contenu dans le contenant en verre (5), la seconde couche du tube (STL) comprenant un polymère soluble qui fournit l'intégrité structurelle du tube de départ à deux couches (20) lors de sa fixation à un ensemble pompe de pulvérisation à buse (9),
la fixation du tube de départ à deux couches (20) à l'ensemble pompe de pulvérisation à buse (9) en fixant une partie de surface (15S) de la première couche du tube (FTL) à une partie de surface adjacente (15S) d'un canal de distribution (13T) de l'ensemble pompe de pulvérisation à buse (9),
la dissolution de la seconde couche du tube de départ à deux couches (20) tandis que les parties de surface adjacentes du tube de départ et de l'ensemble pompe de pulvérisation à buse (9) restent fixées,
dans lequel la première couche du tube restante (FTL), fixée à l'ensemble pompe de pulvérisation à buse (9), est ainsi conçue pour servir de tube plongeur invisible (15) placé dans un parfum liquide contenu dans un contenant en verre (5).

2. Procédé selon la revendication 1, dans lequel :
la première couche du tube (FTL) comprend une couche du tube externe et la seconde couche du tube (STL) comprend une couche du tube interne du tube de départ concentrique à deux couches (20),
l'étape consistant à la fixation comprend la fixation d'une partie de la surface extérieure de la couche du tube externe à une partie correspondante de la surface intérieure de l'ensemble pompe de pulvérisation à buse (9),
l'étape consistant à la dissolution comprend la dissolution de la couche interne du tube de départ à deux couches (20) tandis que les parties correspondantes des surfaces extérieure et intérieure du tube de départ (20) et de l'ensemble pompe de pulvérisation à buse (9) restent fixées, et
dans lequel la couche du tube interne restante, fixée à l'ensemble pompe de pulvérisation à buse (9), est ainsi conçue pour servir de tube plongeur invisible (15) placé dans le parfum liquide contenu dans le contenant en verre (5).

3. Procédé selon la revendication 1, dans lequel :
la première couche du tube (FTL) comprend une couche du tube interne et la seconde couche du tube (STL) comprend une couche du tube externe du tube de départ concentrique à deux couches (20),
l'étape consistant à la fixation comprend la fixation d'une partie de la surface intérieure de la couche de tube interne à une partie correspondante de la surface extérieure de l'ensemble pompe de pulvérisation à buse (9),
l'étape consistant à la dissolution comprend la dissolution de la couche du tube externe du tube de départ à deux couches (20) tandis que les parties de surface intérieure et extérieure correspondantes du tube de départ (20) et de l'ensemble pompe à buse (9) restent fixées, et
dans lequel la couche du tube interne restante, fixée à l'ensemble pompe de pulvérisation à buse, est ainsi conçue pour servir de tube plongeur invisible (15) placé dans le parfum liquide contenu dans le contenant en verre (5).

4. Procédé selon la revendication 1, dans lequel la seconde couche du tube soluble (STL) comprend la couche interne du tube de départ concentrique à deux couches (20).

5. Procédé selon la revendication 1, dans lequel la seconde couche du tube soluble (STL) comprend la couche externe du tube départ concentrique à deux couches (20).

6. Procédé selon la revendication 1, dans lequel la première couche du tube (FTL) en polymère non fluoré a une épaisseur dans une plage de 10 à 100 micromètres, et la seconde couche du tube soluble (STL) a une épaisseur dans une plage de 100 à 250 micromètres, ce qui donne une épaisseur totale de paroi du tube de départ à deux couches dans une plage de 110 à 350 micromètres.

7. Procédé selon la revendication 1, dans lequel le tube plongeur (15) a un module de flexion dans une plage de 200 à 3 500 MPa.

8. Procédé selon la revendication 1, dans lequel le tube plongeur (15) a une transmittance de la lumière dans la plage de 87 à 100 %.

9. Procédé selon la revendication 1, dans lequel le tube plongeur (15) est sensiblement invisible lorsqu'il est placé dans le parfum liquide contenu dans le contenant en verre (5), dans lequel le contenant en verre (5) est conçu pour contenir entre 28,4 et 227,3 cm³ de parfum liquide, et l'indice de réfraction du verre se situe dans une plage de 1,5 à 1,6.

10. Procédé selon la revendication 1, dans lequel le polymère non fluoré de la première couche du tube (FTL) comprend un ou plusieurs parmi :
un copolymère d'oléfines cycliques (COC),
l'éthylène-acétate de vinyle (EVA),
le polypropylène (PP),
le polyéthylène (PE),
l'élastomère thermoplastique (TPU),
l'acétate de polymère (PA),
le polyméthylpentène (PMP),
le polyéthylène téréphtalate (PET), et
le polyéthylène téréphtalate glycol (PETg).

11. Procédé selon la revendication 1, dans lequel le polymère soluble de la seconde couche du tube (STL) comprend un ou plusieurs parmi :
l'Alcool polyvinylique (PVOH) (soluble dans l'eau)
l'Acide polylactique (PLA) (soluble dans l'eau)
le Polyéthylène glycol (PEG) (soluble dans l'eau)
l'Acétate de cellulose (soluble dans l'éthanol)
le Polyméthacrylate de méthyle (PMMA) (soluble dans l'éthanol).

12. Procédé selon la revendication 1, dans lequel le procédé de dissolution comprend le placement du tube de départ à deux couches (20), alors qu'il est fixé à l'ensemble pompe de pulvérisation à buse (9), dans une solution de dissolution destinée à dissoudre la seconde couche du tube (STL).

13. Procédé selon la revendication 1, dans lequel la seconde couche du tube (STL) comprend la couche externe du tube départ à deux couches (20), et le procédé de dissolution comprend le rinçage du tube de départ à deux couches (20), alors qu'il est fixé à l'ensemble pompe de pulvérisation à buse (9), avec une solution de dissolution destinée à dissoudre la seconde couche du tube (STL).
